# EUROPÄISCHE PATENTSCHRIFT

(11) **EP 1 295 767 B1**
(45) Veröffentlichungstag und Bekanntmachung des Hinweises auf die Patenterteilung: **28.03.2007**
(21) Anmeldenummer: 02012753.6
(22) Anmeldetag: 08.06.2002
(51) Int. Cl.: B60S 1/34, F16C 11/06

(54) **Wischerarm**
Wiper arm
Bras d'essuie-glace

(30) Priorität: 21.09.2001 DE 10146721
(43) Veröffentlichungstag der Anmeldung: 26.03.2003
(73) Patentinhaber: ROBERT BOSCH GMBH, 70442 Stuttgart (DE)
(72) Erfinder: Heinrich, Laurent, 67400 Illkirch-Graffenstaden (FR); Lorenz, Karlheinz, 76534 Baden-Baden (DE)

(56) Entgegenhaltungen:
- DE-A- 3 920 243
- DE-A- 19 857 375
- GB-A- 2 102 061
- US-A- 4 865 794
- US-A- 5 884 357

## Beschreibung

### Stand der Technik

Die Erfindung betrifft einen Wischerarm und eine Wischvorrichtung, insbesondere für ein Kraftfahrzeug, nach Gattung der unabhängigen Ansprüche.

Es sind schon zahlreiche Wischerarme für Wischvorrichtungen mit einem Viergelenk für Kraftfahrzeuge, beispielsweise aus der DE 40 32 762 C2 bekannt. Der Wischerarm besteht bei diesen Wischvorrichtungen aus einem Gelenkteil und einem Befestigungsteil mit zwei Kurbeln, mittels derer der Wischerarm an der Wischvorrichtung angelenkt ist. Durch eine pendelnde Bewegung einer der Kurbeln vollführt der Wischerarm eine Pendelhubbewegung, welche das Überstreichen einer günstigeren Wischfläche zulässt als eine bloße Pendelbewegung, bei der ein Kreisringsegment überstrichen wird. Da zwischen den Kurbeln und dem Befestigungsteil große Kräfte zu übertragen sind, muss das Befestigungsteil in den Lagerbereichen der Kurbeln besonders stabil ausgebildet sein und weist daher eine relativ große Bauhöhe auf.

Eine gattungsgemäße Scheibenwischvorrichtung ist aus der DE-A-4436373 bekannt. Des Weiteren zeigt die WO-A-99/10210 alle Merkmale des Oberbegriffs des unabhängigen Anspruchs 1.

### Vorteile der Erfindung

Der erfindungsgemäße Wischerarm mit dem Merkmalen des Hauptanspruches hat den Vorteil, dass das Befestigungsteil zwei Kurbeln aufweist, die jeweils mit einem Lagerbolzen drehfest verbunden sind, wobei das Befestigungsteil aus einem Trägerteil besteht, in das die Lagerschale für die Lagerbolzen eingespritzt ist, und am Trägerteil Arretierungselemente zur Arretierung der Lagerschale vorgesehen sind, um ein Verdrehen der Schale im Betrieb zu vermeiden. Auf diese Weise kann die Bauhöhe des Befestigungsteils und damit des gesamten Wischerarms reduziert werden, was sich positiv auf die Strömungseigenschaften und damit auf die Windgeräusche des Wischerarms auswirkt. Darüber hinaus wird zur Herstellung eines solchen Wischerarms weniger Material benötigt, wodurch sich die Kosten für den Wischerarm reduzieren lassen. Weiterhin wird durch die geringe Bauhöhe eine verbesserte Optik erzielt, da der Wischerarm in der Parkposition beispielsweise unter der Motorhaube des Kraftfahrzeugs verschwinden kann.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Lagerschale als Kugelschale und der Lagerbolzen als Kugelbolzen ausgebildet sind. Auf diese Weise kann die Kurbel, die mit dem Lagerbolzen drehfest verbunden ist, ohne eine axiale Befestigung in die Lagerschale eingeknöpft werden, wenn Lagerschale mehr als eine Halbkugel des Lagerbolzens umfaßt.

Weiterhin ist es als vorteilhaft anzusehen, wenn der Lagerbolzen das Trägerteil in voller Länge durchgreift. Auf diese Weise ist gewährleistet, dass es innerhalb des Lagers zwischen Lagerschale und Lagerbolzen zu einer möglichst großflächigen Berührung kommt, so dass der Verschleiss des Lagers durch eine optimale Kraftverteilung reduziert wird.

Besonders vorteilhaft ist es, wenn der Lagerbolzen die Kurbel in voller Länge durchgreift und auf der der Lagerschale abgewandten Seite an der Kurbel befestigt ist. Auf diese Weise wirken die Scherkräfte, die zwischen dem Lagerbolzen im Bereich der Lagerschale und der Kurbel auftreten, nicht im Bereich der Befestigung, wodurch sich eine erhöhte Festigkeit des Lagerbolzens ergibt.

Erfindungsgemäß sind am Trägerteil formschlüssige Arretierungselemente zur Arretierung der Lagerschale vorgesehen, um ein Verdrehen der Lagerschale im Betrieb zu vermeiden.

Darüber hinaus ist es vorteilhaft, wenn die erste Kurbel durch einen zylindrischen Lagerbolzen und die zweite Kurbel durch einen kugelförmigen Lagerbolzen im Trägerteil gelagert sind. Dadurch werden die Lagerkräfte insbesondere dann reduziert, wenn die Antriebsachsen der Kurbeln nicht exakt parallel zueinander ausgerichtet sind, wie dies in der Serienfertigung im Rahmen der üblichen Toleranzen häufig der Fall ist.

Der erfindungsgemäße Wischerarm, welcher ein Befestigungsteil mit zwei Kurbeln aufweist, wobei die erste Kurbel durch ein Drehgelenk und die zweite Kurbel durch ein Kugelgelenk am Trägerteil angelenkt sind hat den Vorteil, dass die Lagerkräfte durch die zweidimensionale Bewegungsmöglichkeit der zweiten Kurbel reduziert werden, wenn die Antriebsachsen der beiden Kurbeln nicht exakt parallel zueinander ausgerichtet sind.

Besonders vorteilhaft ist weiterhin, wenn zumindest das Trägerteil durch einen Deckel vor Umwelteinflüssen geschützt ist, um Verschmutzungen und Korrosion am Trägerteil und insbesondere an den Lagern zu verhindern.

Die erfindungsgemäße Wischvorrichtung mit den Merkmalen des Anspruches 8 hat den Vorteil, dass sie eine niedrige Bauhöhe im Sichtbereich aufweist, wodurch die Aerodynamik der Wischvorrichtung verbessert wird und Windgeräusche der Wischvorrichtung reduziert werden.

### Zeichnungen

Ein Ausführungsbeispiel der Erfindung ist in den Zeichnungen dargestellt und in der nachfolgenden Beschreibung näher erläutert.

Es zeigen
Figur 1 eine Wischvorrichtung mit einem erfindungsgemäßen Wischerarm in schematischer Darstellung,
Figur 2 einen Schnitt durch das Befestigungsteil eines erfindungsgemäßen Wischerarmes.

### Beschreibung des Ausführungsbeispieles

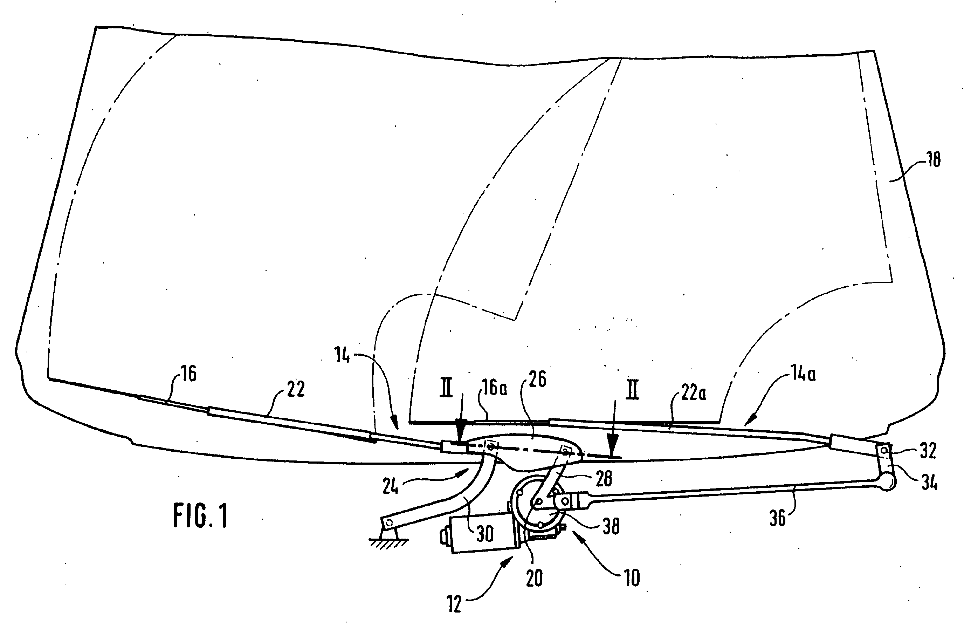

In Figur 1 ist eine erfindungsgemäße Wischvorrichtung (10) mit einem Viergelenk schematisch dargestellt. Diese besteht im Wesentlichen aus einem Antriebsaggregat 12, welches zwei Wischerarme 14, 14a antreibt, an denen Wischblätter 16, 16a befestigt sind. Die Wischblätter 16, 16a gleiten im Betrieb pendelnd über eine Scheibe 18, beispielsweise der Windschutzscheibe eines Kraftfahrzeuges.

Das Antriebsaggregat 12 ist beispielweise als umlaufender oder reversierender Elektromotor ausgebildet, dessen Ankerwelle mittels einer Schnecke ein Schneckenrad kämmt. Die Welle des Schneckenrades bildet die die Abtiebswelle 20 des Antriebsaggregates 12.

Die Wischerarme 14, 14a weisen jeweils ein Gelenkteil 22, 22a auf, welches an einem Ende mit dem Wischblatt 16 beziehungsweise mit dem Wischblatt 16a drehbeweglich verbunden ist. Ein Gelenkteil 22 der Wischerarme 14, 14a ist an dem Wischblatt 16 abgewandten Ende mit einem Befestigungsteil 24 verbunden, welches im Wesentlichen aus einem Längsteil 26 und zwei Kurbeln 28, 30 besteht. Die beiden Kurbeln 28, 30 sind jeweils mit einem Ende drehbeweglich am Längsteil 26 befestigt. Die erste Kurbel 28 ist mit ihrem dem Längsteil 26 abgewandten Ende, mit der Abtriebswelle 20 des Antriebsaggregates 12 drehfest verbunden. Die zweite Kurbel 30 ist mit ihrem dem Längsteil 26 abgewandten Ende an der Fahrzeugkarosserie oder an einem festen Lager an der Wischvorrichtung mit konstantem Abstand zur Abtriebswelle 20 drehbeweglich angelenkt.

Der fahrerseitige Wischerarm 14a ist, wie allgemein üblich, über ein Wischerlager 32 mit einer Antriebskurbel 34 drehfest verbunden, die wiederum über eine Schubstange 36 exzentrisch zur Abtriebswelle 20, beispielsweise über einen, in festem Winkel zur ersten Kurbel 28 angeordneten Hebel 38 oder direkt an der ersten Kurbel 28 verbunden ist, so daß das antriebsseitige Ende der Schubstange 36 im Betrieb eine Kreis- oder zumindest Kreisbogenabschnittsförmige Bewegung vollführt.

Führt die Abtriebswelle 20 nun eine Rotationsbewegung aus, so bewegt sich das fahrerseitige Wischblatt 16a über die Scheibe 18 und überstreicht die Fläche eines Kreisringsegmentes. Das beifahrerseitige Wischblatt 16 überstreicht eine Fläche, die der Fläche eines Kreisringsegmentes entspricht, die jedoch mit einer Hubbewegung überlagert ist.

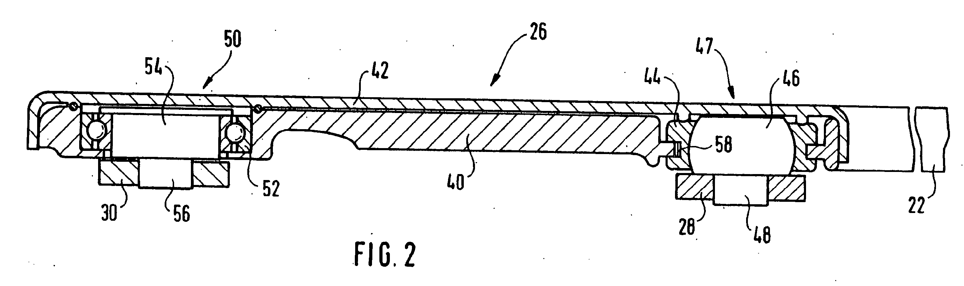

In Figur 2 ist ein Querschnitt durch das Befestigungsteil 24 gezeigt. Das Längsteil 26 besteht aus einem Trägerteil 40 welches von einem Deckel 42 abgedeckt ist. In das Trägerteil 40 ist eine Lagerschale 44 eingespritzt, die auf ihrer Innenseite einen Kugelschalenabschnitt aufweist, in dem ein Kugelbolzen 46 gelagert ist. Lagerschale 44 und Kugelbolzen 46 bilden auf diese Weise ein kugeliges Lager 47.

Der Kugelbolzen 46 besteht im Wesentlichen aus einem Kugelabschnitt, an den sich ein zylindrischer Abschnitt 48 anschließt. Dieser zylindrische Abschnitt 48 durchgreift die erste Kurbel 28 in ihrer vollen Dicke, oder anders formuliert, ist in eine Bohrung in der ersten Kurbel 28 eingesetzt und an der dem kugeligen Lager 47 abgewandten Seite der ersten Kurbel 28 beispielsweise durch Schweißen oder Verstemmen befestigt. Die zweite Kurbel 30 ist über ein zweites Lager 50 am Trägerteil 40 befestigt.

Das zweite Lager 50 besteht dabei aus einem Kugellager 52, dessen Außenring in das Trägerteil 40 eingepresst ist. Der Innenring des Kugellagers 52 trägt den Zylinderbolzen 54, der mit dem Innenring verstemmt ist. Der Zylinderbolzen 54 ist außerhalb des Bereiches des Kugellagers 52 verjüngt. Dieser verjüngte Abschnitt 56 ist in eine Bohrung der zweiten Kurbel 30 eingesetzt und drehfest mit dieser verbunden. Dies wird beispielsweise dadurch erreicht, dass der verjüngte Abschnitt 56 die zweite Kurbel 30 in ihrer vollen Dicke durchgreift und auf der dem zweiten Lager 50 abgewandten Seite verschweißt, verstemmt oder vernietet ist.

Das Gelenkteil 22 ist an das Trägerteil 40 des Längsteil 26 (Figur 1) mittels eines Gelenks verbunden, das ein Abklappen des Wischerarms 14 von der zu wischenden Fläche, beispielsweise für einen wechsel des Wischblatts 16, erlaubt. Das Trägerteil 40 ist in einem Gußverfahren hergestellt. Im Bereich der in das Trägerteil 40 eingespritzten Lagerschalen 44 weist das Trägerteil 40 Arretierungselemente 58, die beispielsweise eine zahnartige Struktur aufweisen, auf und die verhindern, dass die eingespritzte Lagerschale 44 sich während des Betriebes vom Trägerteil 40 löst und mit dem Kugelbolzen 46 mitdreht.

Das Trägerteil 40 kann auch aus einem Kohlefasermaterial hergestellt sein, wodurch sich das Gewicht des Längsteiles 26 reduzieren lässt. Die Lagerschalen 44 können dabei aus Kunststoff hergestellt sein. Bei der Herstellung eines erfindungsgemäßen Wischerarmes kann dann das Trägerteil 40 in eine Gussform für die Lagerschalen 44 eingelegt werden und anschließend das Material für die Lagerschalen 44 eingespritzt werden, so dass die Lagerschalen 44 direkt an das Trägerteil 40 angespritzt sind. Anschließend können die Kurbeln 28, 30 mit den Kugelbolzen 46 verbunden werden, und die Kurbeln 28, 30 in die Lagerschalen 44 eingepresst werden. Selbstverständlich können auch die Kurbeln 28, 30 aus einem Karbonmaterial hergestellt sein.

## Patentansprüche

1. Wischerarm (14), insbesondere für eine Wischvorrichtung eines Kraftfahrzeugs, mit einem Befestigungsteil (24), welches eine erste Kurbel (28) und eine zweite Kurbel (30) zur Anlenkung des Wischerarms (14) an zwei Punkten umfasst, und mindestens eine der Kurbeln (28, 30) mit einem Lagerbolzen (46) drehfest verbunden ist, und das Befestigungsteil (24) zumindest ein Trägerteil (40) und eine in dieses eingespritzte Lagerschale (44) aufweist und der Lagerbolzen (46) in der Lagerschale (44) sitzt, **dadurch gekennzeichnet, dass** am Trägerteil (40) Arretierungselemente (58) zur Arretierung der Lagerschale (44) vorgesehen sind, um ein Verdrehen der Schale im Betrieb zu vermeiden.

2. Wischerarm (14) nach Anspruch 1, **dadurch gekennzeichnet, dass** die Lagerschale (44) als Kugelschale und der Lagerbolzen (46) als Kugelbolzen ausgebildet sind.

3. Wischerarm (14) nach Anspruch 1 oder 2, **dadurch gekennzeichnet, dass** der Lagerbolzen (46) die Lagerschale (44) und/oder das Trägerteil (40) in voller Länge durchgreift.

4. Wischerarm (14) nach einem Ansprüche 1 bis 3, **dadurch gekennzeichnet, dass** mindestens ein Lagerbolzen (46) mindestens eine Kurbel (28, 30) in voller Länge durchgreift und auf der der Lagerschale (44) abgewandten Seite an der Kurbel (28, 30) befestigt ist.

5. Wischerarm (14) nach einem der vorhergehenden Ansprüche, **dadurch gekennzeichnet, dass** die erste Kurbel (28) durch einen zumindest abschnittsweise zylindrischen Lagerbolzen (54) und die zweite Kurbel durch einen kugelförmigen Lagerbolzen (46) im Trägerteil (40) gelagert sind.

6. Wischerarm (14) nach einem der vorhergehenden Ansprüche, **dadurch gekennzeichnet, dass** die erste Kurbel (28) durch ein Drehgelenk (50) und die zweite Kurbel (30) durch ein Kugelgelenk (47) am Trägerteil (40) angelenkt sind.

7. Wischerarm (14) nach einem der vorhergehenden Ansprüche, **dadurch gekennzeichnet, dass** zumindest das Trägerteil (40) durch einen Deckel (42) vor Umwelteinflüssen geschützt ist.

8. Wischvorrichtung, insbesondere für ein Kraftfahrzeug, **dadurch gekennzeichnet, dass** ein Wischerarm (14) vorgesehen ist, der nach einem der vorhergehenden Ansprüche ausgebildet ist.

## Claims

1. Wiper arm (14), in particular for a wiper device of a motor vehicle, with a fastening part (24) which comprises a first crank (28) and a second crank (30) for the articulation of the wiper arm (14) at two points, and at least one of the cranks (28, 30) is connected in a rotationally fixed manner to a bearing bolt (46), and the fastening part (24) has at least one support part (40) and a bearing shell (44) injected into the latter, and the bearing bolt (46) sits in the bearing shell (44), **characterized in that** locking elements (58) for locking the bearing shell (44) are provided on the support part (40) in order to avoid rotation of the shell during operation.

2. Wiper arm (14) according to Claim 1, **characterized in that** the bearing shell (44) is designed as a spherical shell and the bearing bolt (46) as a ball-headed bolt.

3. Wiper arm (14) according to Claim 1 or 2, **characterized in that** the bearing bolt (46) reaches through the bearing shell (44) and/or the support part (40) over its full length.

4. Wiper arm (14) according to one of Claims 1 to 3, **characterized in that** at least one bearing bolt (46) reaches through at least one crank (28, 30) over its full length and, on the side facing away from the bearing shell (44), is fastened to the crank (28, 30).

5. Wiper arm (14) according to one of the preceding claims, **characterized in that** the first crank (28) is mounted in the support part (40) by means of a bearing bolt (54) which is cylindrical at least in some sections, and the second crank is mounted in the support part (40) by means of a spherical bearing bolt (46).

6. Wiper arm (14) according to one of the preceding claims, **characterized in that** the first crank (28) is articulated on the support part (40) by means of a rotary joint (50), and the second crank (30) is articulated on the support part (40) by means of a ball-and-socket joint (47).

7. Wiper arm (14) according to one of the preceding claims, **characterized in that** at least the support part (40) is protected against environmental influences by means of a cover (42).

8. Wiper device, in particular for a motor vehicle, **characterized in that** a wiper arm (14) designed according to one of the preceding claims is provided.

## Revendications

1. Bras d'essuie-glace (14), notamment pour un dispositif d'essuie-glace d'un véhicule automobile, comportant une pièce de fixation (24) ayant une première manivelle (28) et une seconde manivelle (30) pour articuler le bras d'essuie-glace (14) en deux points, et dont au moins l'une des manivelles (28, 30) est reliée solidairement en rotation à un axe de palier (46),
la pièce de fixation (24) comportant au moins une partie de support (40) et une coupelle de palier (44) injectée dans cette pièce, avec l'axe de palier (48) logé dans la coupelle de palier (44),
**caractérisé en ce que**
la partie de support (44) comporte des éléments de blocage (58) pour bloquer la coupelle de palier (44), pour éviter que la coupelle tourne pendant le fonctionnement.

2. Bras d'essuie-glace (14) selon la revendication 1,
**caractérisé en ce que**
la coupelle de palier (44) est une coupelle sphérique et l'axe de palier (46) est un axe en forme de rotule.

3. Bras d'essuie-glace (14) selon les revendications 1 ou 2,
**caractérisé en ce que**
l'axe de palier (46) traverse la coupelle de palier (44) et/ou la pièce de support (40) sur toute sa longueur.

4. Bras d'essuie-glace (14) selon l'une des revendications 1 à 3,
**caractérisé en ce qu'**
au moins un axe de palier (46) traverse au moins une manivelle (28, 30) sur toute sa longueur, et son côté, opposé à la coupelle de palier (44), porte solidairement la manivelle (28, 30).

5. Bras d'essuie-glace (14) selon l'une des revendications précédentes,
**caractérisé en ce que**
la première manivelle (28) est montée dans la partie de support (40) par un axe de palier (54) au moins en partie cylindrique et la seconde manivelle est logée par un axe de palier en forme de rotule (46) dans la partie de support (40).

6. Bras d'essuie-glace (14) selon l'une des revendications précédentes,
**caractérisé en ce que**
la première manivelle (28) est articulée à la partie de support (40) par une articulation de rotation (50) et la seconde manivelle (30) est articulée à la partie de support (40) par une articulation à rotule (47).

7. Bras d'essuie-glace (14) selon l'une des revendications précédentes,
**caractérisé en ce qu'**
au moins la partie de support (40) est protégée contre l'environnement par un couvercle (42).

8. Dispositif d'essuie-glace, notamment pour un véhicule automobile,
**caractérisé par**
un bras d'essuie-glace (14) selon l'une des revendications précédentes.
